# EUROPÄISCHE PATENTSCHRIFT

(11) **EP 0 573 899 B1**
(45) Veröffentlichungstag und Bekanntmachung des Hinweises auf die Patenterteilung: **24.04.1996**
(21) Anmeldenummer: 93108949.4
(22) Anmeldetag: 03.06.1993
(51) Int. Cl.: G21C 3/322

(54) **Brennelement eines Kernreaktors mit einer Gitterstruktur zur Drallerzeugung**
Fuel bundle for nuclear reactor with swirl imparting space grid
Assemblage combustible de réacteur nucléaire avec grille imprimant un mouvement tourbillonnaire

(30) Priorität: 10.06.1992 DE 4219008
(43) Veröffentlichungstag der Anmeldung: 15.12.1993
(73) Patentinhaber: SIEMENS AKTIENGESELLSCHAFT, D-80333 München (DE)
(72) Erfinder: Meseth, Johann, Dr., W-6110 Dieburg (DE)

(56) Entgegenhaltungen:
- EP-A- 0 185 219
- EP-A- 0 308 701
- EP-A- 0 455 847
- EP-A- 0 514 116
- DE-A- 2 625 930
- DE-A- 3 519 421
- FR-A- 2 169 140
- DATABASE WPI Section Ch, Week 8337, Derwent Publications Ltd., London, GB; Class J, AN 83-763753 & SU-A-973 146

## Beschreibung

Die Erfindung betrifft ein Brennelement mit einem Bündel von Brennstäben, zwischen denen sich Stege erstrecken, die in einer ungefähr zu den Stegen parallelen Ebene zwischen den Stäben ungefähr parallel verlaufen und an ihrer Oberkante Laschen tragen, die zu ihren Enden zu kontinuierlich stärker gegenüber dem Steg verdrillt sind.

Stege mit Laschen sind bei Brennelementen für Druckwasser-Reaktoren üblich, um einen Strom von Kühlmittel und flüssigem Moderator, der in den Zwischenräumen ("strömungskanälen") zwischen den Brennstäben an den Stäben entlanggeleitet wird, in benachbarte Strömungskanäle abzulenken. Dadurch entsteht eine Durchmischung der Kühlmittelströme in den einzelnen Strömungskanälen, wodurch die Temperaturverteilung und die Kühlung der Stäbe vergleichmäßigt wird.

Bei Siedewasser-Reaktoren sind Laschen vorgeschlagen worden, die so gebogen sind, daß sie in den einzelnen Strömungskanälen jeweils einen Drall des Kühlmittelstromes erzeugen. Von diesem Drall sollen vor allem im oberen Teil des Brennelementes, wo ein beträchtlicher Teil des Kühlmittels als Dampf vorliegt, eine Trennung des Flüssigkeit/Dampf-Gemisches erreicht werden, bei der die Flüssigkeit nach außen, also zu den heißen Brennstäben hin, geschleudert wird, während der Dampf in der Mitte des Strömungskanals mit hoher Geschwindigkeit abgeführt wird.

Derartige drallerzeugende Laschen können an den Stegen von Abstandhaltern, an denen die Brennstäbe des Bündels über Noppen und/oder Federn abgestützt sind, oder an den Stegen von Gittern vorgesehen sein, die lediglich als Träger derartiger Drallerzeuger dienen und daher höchstens Vorsprünge der Stege tragen, die eine Berührung zwischen den Laschen und den Brennstäben verhindern, ohne eine feste Auflage der Brennstäbe an den Stegen zu bewirken.

Es ist auch schon vorgeschlagen worden, an die Stegoberkanten von Abstandhaltern Laschen anzusetzen, die zu ihren Enden zu kontinuierlich verdrillt sind, um dem Kühlmittel einen besseren Drall zu geben (FR-A-2.169.140). Diese Laschen können sich dabei über den ganzen Zwischenraum zwischen zwei Abstandhaltern erstrecken und an ihren Enden mit den jeweiligen Abstandhaltern verschweißt sein. Dabei sind dann die Enden der Laschen um 90 ° gegeneinander verdrillt und der Kühlmittelstrom erhält auf der ganzen Länge zwischen den Brennstäben praktisch einen konstanten Drall. Dies ist sowohl bei Abstandhaltern des "egg-crate"-Typs (einander kreuzende Stege des Abstandhalters, EP-A-0 185 219) als auch des "ferrule"-Typs (Stege in Form aneinander geschweißter Hülsen, EP-A-0 514 116) und insbesondere im oberen Teil eines Brenn-elements mit teil-langen Brennstäben (EP-A-0 514 116) vorteilhaft.

Der Erfindung liegt die Aufgabe zugrunde, auf eine konstruktiv einfache Weise einen möglichst hohen Drall mit einer möglichst wirksamen Trennung von Dampfblasen und Flüssigkeitströpfchen zu erreichen, ohne das an den Brennstäben entlangströmende Flüssigkeits/Dampf-Gemisch stark zu behindern.

Diese Aufgabe wird dadurch gelöst, daß die Verdrillung überproportional mit dem Abstand vom Steg zunimmt. Bei Brennelementen mit Längsstegen und Querstegen können die Längsstege in einer ersten, ungefähr zu den Stäben senkrechten Ebene und die Querstege in einer zweiten ungefähr zur ersten Ebene parallelen Ebene angeordnet sein, wobei die Längsstege mit den Querstegen über Laschen verbunden sind, die sich in von mehreren Brennstäben begrenzten Strömungskanälen befinden, um eine zu den Stäben ungefähr parallelen Achse verdrillt sind und bei einer Verdrillung von 90° gegenüber den Stegen stetig in die Längsstege bzw. Querstege übergehen.

Die Erfindung geht davon aus, daß im Strom der Flüssigkeit ein möglichst geringer Drall erzeugt werden soll, um einen dadurch bedingten Druckverlust zu minimieren. Um aber die Entmischung von Flüssigkeit und Dampf zu fördern, muß dem strömenden Flüssigkeits/Dampf-Gemisch ein hoher Drall eingeprägt werden.

Daher wird in den brennstabnahen Bereichen, in denen sich das Wasser sammelt bzw. in Nähe der Stege, wo im Kühlmittelstrom die Flüssigkeit noch schlecht vom Dampf getrennt ist, nur ein geringer Drall erzeugt, der jedoch im Verlauf der Lasche immer mehr verstärkt wird, um das Gemisch aus Flüssigkeit und Dampf dort zu trennen.

Daher sieht die Erfindung vor, daß die Laschen zunächst nur schwach verdrillt sind, jedoch zu ihrem Ende hin kontinuierlich immer stärker gegenüber dem Steg verdrillt werden, d.h. die "Verdrillung" (Winkel zwischen Lasche und Steg) nimmt überproportional mit dem Abstand vom Steg zu.

Um "Totzonen" im Strömungsschatten der verdrillten Laschen zu vermeiden, erfolgt die Änderung der Strömungsrichtung am Übergang der Stege in die Laschen nicht in Form eines Knickes, sondern kontinuierlich und sanft.

Vorteilhaft sind die Laschen so stark verdrillt, daß sie zu den Stegen senkrechte Laschenteile aufweisen. Die Laschenenden sind also z. B. gegenüber dem Steg um 90°, 270°, 350° (allgemein: n x 180° - 90°) verdrillt.

Diese Laschenteile gehen dabei in Stegteile über, die als getrennte Teile angeschweißt oder aber insbesondere an die Laschen angeformt sind, also zusammen mit den Laschen und dem Steg aus einem Blech ausgestanzt werden können. Die Laschenteile der Laschen benachbarter Stege können miteinander verschweißt werden, um Querstege zur Verbindung der benachbarten, einander parallelen Stege zu bilden. Dadurch entsteht eine Gitterstruktur, die an sich nur aus ausgestanzten Längsstegen gebildet ist, die in einer Stegebene angeordnet sind, wobei aber diese Längsstege in einer über dieser Ebene liegenden, zweiten Ebene durch Querstege verbunden sind, die von den erwähnten, zusammengeschweißten Laschenteilen gebildet sind.

Die Längsstege gehen also an ihrer der Strömungsrichtung abgewandten Seite in die verdrillten Laschen und in Querstege über. Dadurch verringert sich die Zahl der zu stanzenden Blechteile, während die Zahl der Schweißstellen praktisch gleich bleibt gegenüber einem rostförmigen Gitter, das aus ineinander gesteckten und miteinander verschweißten Längs-und Querstegen nach dem Stand der Technik gefertigt ist.

Die Verdrillung wird erleichtert, wenn sich die Laschen zu ihrem Ende zu kontinuierlich verjüngen. Diese Verjüngung ist insbesondere aber vorteilhaft, weil dadurch die breiten Teile der Lasche, die bis in die Nähe der Brennstäbe reichen, nur mit einer mäßigen Verdrillung in die dort gesammelte Flüssigkeit ragen; der Flüssigkeitsstrom ist also wenig gestört (geringer Druckverlust). Die stärker verdrillten Enden der Laschen jedoch prägen dem im Zentrum der Strömungskanäle strömenden Dampf einen zur restlichen Trennung der Flüssigkeit führenden, stärkeren Drall ein.

Wird eine derartige Gitterstruktur als Abstandhalter verwendet, so sind Stützelemente zum Abstützen der Brennstäbe erforderlich. Dazu ist vorgesehen, daß der zwischen zwei Brennstäben verlaufende Teil eines Steges zwei aus dem Stegteil geformten Noppen, an denen einer der beiden Brennstäbe abgestützt ist, und eine Feder, an der der andere Stegteil abgestüzt ist, trägt.

Die Brennstäbe der meisten Brennelemente, insbesondere der Siedewasser-Brennelemente, sitzen in quadratischen Maschen eines fiktiven Gitters bzw. bei einem aus Quer- und Längsstegen gebildeten Abstandhalter in den Maschen des Abstandhalte-Gitters. Die Drallerzeuger sind dabei in Strömungskanälen, die von vier einander benachbarten Brennstäben gebildet sind, also an den Kreuzungsstellen des Gitters vorgesehen. Vorteilhaft sind bei benachbarten, laschentragenden Kreuzungspunkten die beiden Laschen spiegelbildlich zueinander verdrillt. In dem quadratischen Gitter entsteht dadurch ein schachbrettartiges Muster aus Strömungen, die alternierend rechtsdrehend und linksdrehend sind. In den Engstellen zwischen zwei benachbarten Brennstäben, also den Übergangsstellen zweier Strömungskanäle, ist die Tangentialrichtung der beiden Drallstörmungen daher gleichgerichtet, so daß sich die beiden Drallstörmungen gegenseitig nicht bremsen.

Diese Weiterbildungen der Erfindung sind in den Unteransprüchen gekennzeichnet und werden anhand von einem Ausführungsbeispiel und fünf Figuren weiter erläutert.
Es zeigen:
Figur 1 einen Querschnitt durch einen vier Brennstäbe umfassenden Bereich eines erfindungsgemäßen Abstandhalters;
Figur 2 einen Teil eines aus einem Blech gestanzten Längssteges mit Laschen, die noch nicht verdrillt sind;
Figuren 3 bis 5 den entsprechenden Längssteg bei einer Verdrillung der Laschen um 90°, 270° bzw. 450°;
Figuren 6 und 7 den unverdrillten Längssteg und die Aufsicht auf eine verdrillte Lasche bei einer Verdrillung um 180°; und
Figur 8 eine Aufsicht auf eine um 360° verdrillte Lasche.

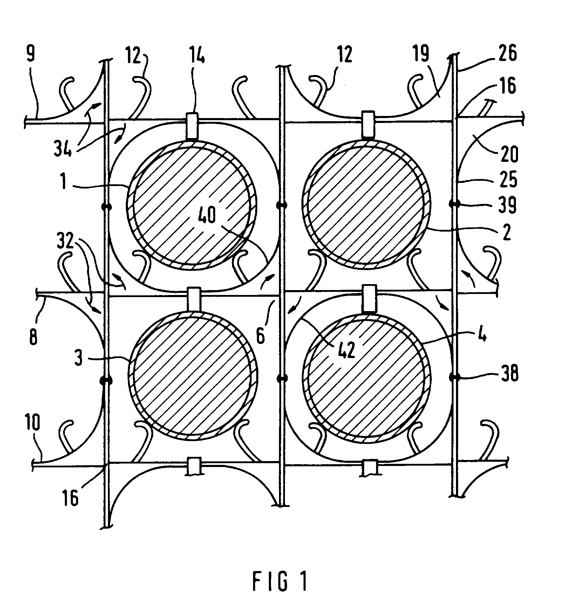

Die vier Brennstäbe 1, 2, 3, 4 der Figur 1 begrenzen einen Strömungskanal 6 und zwischen ihnen erstreckt sich der Längssteg 8, zu dem weitere Längsstege 9 und 10 parallel sind.

Aus dem Blech des Steges sind seitliche Vorsprünge in Form herausgebogener Blechstreifen 12 geformt, an die sich die Brennstäbe 1 und 2 abstützen. Zur Abstützung der Brennstäbe 3 und 4 trägt der Längssteg jeweils eine Feder 14.

Mit 16 ist die Längsachse des Strömungskanals bezeichnet, die gleichzeitig die Mittelachse einer verdrillten Lasche bildet, deren zu beiden Seiten der Mittelachse liegenden Teile mit 19 und 20 bezeichnet sind.

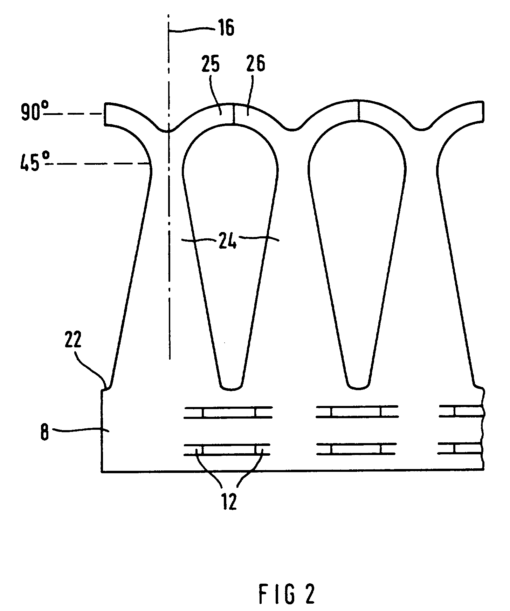

Wie Figur 2 zeigt, ist der Längssteg aus einem Blech gestanzt und weist an seiner Oberkante 22 Laschen 24 auf, die sich zu ihrem Ende zu verjüngen. An diesem verjüngten Ende sind Stegteile 25, 26 angeformt.

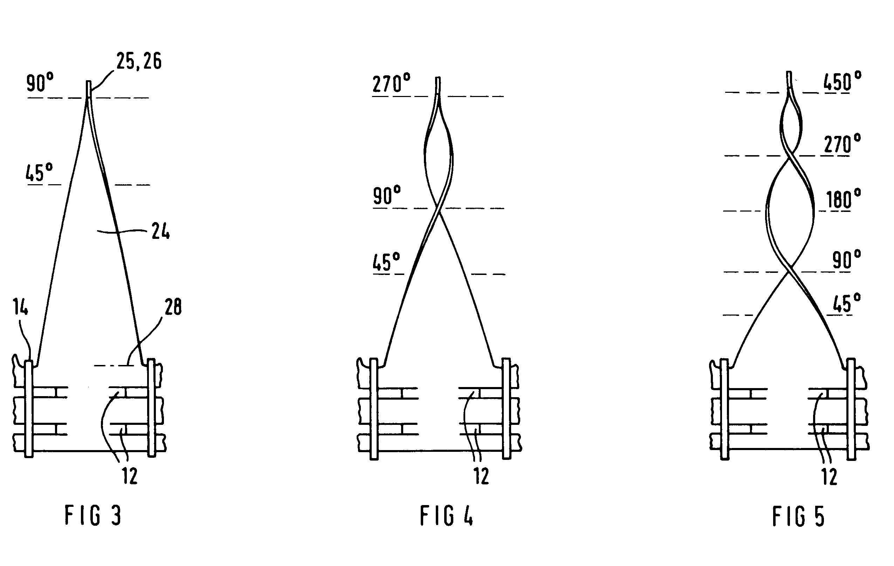

Die Laschen werden nun gegenüber der Ebene des Steges so verdrillt, daß ihre Enden senkrecht zum Steg stehen (Figur 3). Dabei ist ein Knick an der Oberkante 28 des Stege vermieden, vielmehr geht der Steg hier stetig und langsam in die Lasche über. Der Drillwinkel der Lasche gegenüber dem Steg nimmt dabei überproportional mit dem Abstand vom oberen Rand des Steges zu.

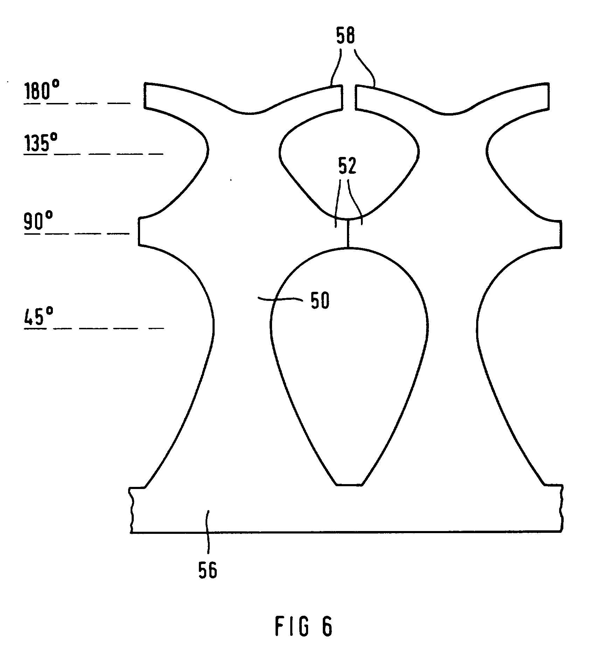

Diese kontinuierlich stärkere Verdrillung ergibt sich deutlich aus den Figuren 4 und 5, in denen jeweils die Ebenen angegeben sind, bei denen eine Verdrillung um 90°, 180°, 270° erreicht ist.

Die in Figur 1 eingetragenen Pfeile 32 und 34 zeigen die Drehrichtung der Verdrillung an. Mit 38, 39 sind Schweißnähte bezeichnet, mit denen die senkrecht zu den Längsstegen stehenden Stegteile der Lasche mit den entsprechenden Stegteilen an den Laschen benachbarter Längsstege verbunden sind.

Bei der in Figur 1 gezeigten Form ist nur der in Figur 3 gezeigte maximale Drillwinkel von 90° vorgenommen. Die Kontur der Seitenkanten 40, 42 der Laschen ist so gewählt, daß sich nach der Verdrillung ein praktisch konstanter Abstand gegenüber den Brennstäben ergibt.

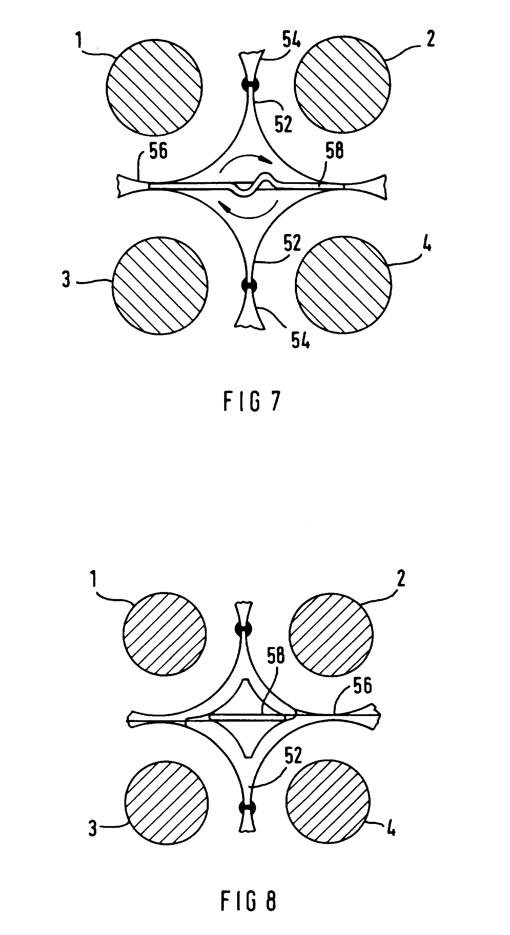

Figur 6 zeigt einen Teil eines Steges vor seiner Verdrillung, dessen Laschenteile 50 in Stegteile 52 übergehen, die in einer Ebene liegen, in der eine Verdrillung um 90° gegenüber dem Steg 56 erreicht ist. Die Stegteile 52 sind mit den Stegteilen 54 der Laschen benachbarter Stege zu einem Quersteg zusammengeschweißt (Figur 7).

Die Laschen des Steges 56 tragen dabei noch freie Enden 58, die in eine Ebene reichen, in der die Verdrillung 180° beträgt. Die Kontur der Laschen ist dabei so gewählt, daß sich nach der Verdrillung ein Ringraum konstanter Breite zwischen den Laschen und den Brennstäben ergibt.

Figur 8 zeigt Laschen mit einer Verdrillung von 360°. Hierbei liegen in jedem Quadranten des Strömungskanals zwei schraubenförmige Windungen der verdrillten Lasche übereinander, deren Steigung aber wegen der zu den Laschenenden zunehmenden Verdrillung kontinuierlich abnimmt. Die Kontur der Lasche ist dabei so gewählt, daß die untere Windung einen schmaleren, die obere Windung einen breiteren Ringraum um die Brennstäbe frei läßt.

Die Erfindung prägt also dem Kühlmittelstrom in den einzelnen Strömungskanälen einen intensiven Drall auf. Dabei wird aber die Flüssigkeit in die den Brennstäben benachbarten Bereiche abgedrängt, wo sie zur Kühlung der Brennstäbe benötigt wird, und nur wenig in Drall versetzt. Dort tritt nur eine geringe tangentiale Geschwindigkeit und ein geringer Strömungswiderstand auf. Der Dampf jedoch fließt - nahezu entkoppelt vom Flüssigkeitsstrom - mit einem tolerierbaren Druckverlust durch die Mitte des Strömungskanals. Da der Dampf hohe Geschwindigkeiten erreichen kann und schnell abgeführt wird, erhöht sich der Volumenanteil der Flüssigkeit und damit die Moderation der Neutronen. Dadurch wird bei hoher Kühlung eine gute Ausnutzung des Brennstoffs erreicht.

## Patentansprüche

1. Brennelement mit einem Bündel von Brennstäben (1, 2, 3, 4), zwischen denen sich in einer ungefähr zu den Stäben senkrechten Ebene ungefähr parallel zueinander verlaufende, hochkant stehende Stege (8, 9, 10) erstrecken, die an ihrer Oberkante (22) Laschen (19, 20, 24, 50) tragen, die zu ihren Enden zu kontinuierlich stärker gegenüber dem Steg verdrillt sind, **dadurch gekennzeichnet**, daß die Verdrillung überproportional mit dem Abstand vom Steg zunimmt.

2. Brennelement nach Anspruch 1,
**dadurch gekennzeichnet**, daß die Stege an ihrer Oberkante sanft in die verdrillten Laschen übergehen.

3. Brennelement nach Anspruch 1 oder 2,
**dadurch gekennzeichnet**, daß sich die Laschen bis zu einer Verdrillung um 45° gegenüber den Stegen kontinuierlich verjüngen.

4. Brennelement nach einem der Ansprüche 1 bis 3,
**dadurch gekennzeichnet**, daß die Laschen gegenüber dem Steg um 90° verdrillte Laschenteile aufweisen, die in Querstege (25, 26) übergehen, die die Enden der Laschen benachbarter Stege miteinander verbinden.

5. Brennelement nach Anspruch 4,
**dadurch gekennzeichnet**, daß die Laschenteile der Laschen benachbarter Stege angeformte Stegteile aufweisen und die Querstege durch Verschweißen (38, 39) der Stegteile gebildet werden.

6. Brennelement nach einem der Ansprüche 1 bis 5,
**dadurch gekennzeichnet**, daß ein zwischen zwei Brennstäben (1, 3) verlaufender Teil eines Steges zwei aus dem Steg geformte Noppen (12), an denen der eine der beiden Brennstäbe abgestützt ist, und eine Feder (14), an der der andere Brennstab abgestützt ist, trägt.

7. Brennelement nach einem der Ansprüche 1 bis 6,
**dadurch gekennzeichnet**, daß die Brennstäbe in quadratischen Maschen eines fiktiven Gitters und die Laschen in Kreuzungspunkten des Gitters angeordnet sind, und daß bei benachbarten, laschentragenden Kreuzungspunkten die Laschen dieser beiden Kreuzungspunkte spiegelbildlich zueinander verdrillt sind (Pfeile 32, 34).

8. Brennelement nach einem der Ansprüche 1 bis 7,
**dadurch gekennzeichnet**, daß sich in zwei benachbarten Strömungskanälen, die jeweils von mehreren Brennstäben begrenzt sind, spiegelbildlich zueinander verdrillte Laschen befinden.

## Claims

1. Fuel element with a bundle of fuel rods (1, 2, 3, 4) between which upright bars (8, 9, 10) extend, which bars extend approximately parallel to each other in a plane approximately perpendicular to the rods, the bars supporting on their upper edge (22) brackets (19, 20, 24, 50) which towards their ends are twisted to a continuously greater degree in relation to the bar, characterized in that the twisting increases in an overproportional manner with clearance from the bar.

2. Fuel element according to claim 1, characterized in that at their upper edge the bars pass smoothly into the twisted brackets.

3. Fuel element according to claim 1 or 2, characterized in that the brackets taper continuously up to a twisting of 45° in relation to the bars.

4. Fuel element according to one of claims 1 to 3, characterized in that the brackets have bracket parts twisted relative to the bar by 90°, the bracket parts passing over into transverse bars (25, 26) which connect the ends of the brackets of adjacent bars to each other.

5. Fuel element according to claim 4, characterized in that the bracket parts of the brackets of adjacent bars have integrally moulded bar parts and the transverse bars are formed by welding (38, 39) of the bar parts.

6. Fuel element according to one of claims 1 to 5, characterized in that a part of a bar extending between two fuel rods (1, 3) supports two knobs (12) formed from the bar, on which knobs one of the two fuel rods is supported, and a spring (14), on which the other fuel rod is supported.

7. Fuel element according to one of claims 1 to 6, characterized in that the fuel rods are arranged in square meshes of a hypothetical grid and the brackets are arranged in points of intersection of the grid, and in that at adjacent, bracket-supporting points of intersection the brackets of these two points of intersection are twisted in a mirror-inverted manner with respect to each other (arrows 32, 34).

8. Fuel element according to one of claims 1 to 7, characterized in that in two adjacent flow channels, each of which is limited by several fuel rods, there are brackets twisted in a mirror-inverted manner with respect to each other.

## Revendications

1. Assemblage combustible comportant un faisceau de crayons (1,2,3,4) combustibles, entre lesquels s'étendent, dans un plan sensiblement perpendiculaire aux crayons, des réglettes (8,9,10), disposées sur chant et sensiblement parallèles les unes aux autres, ces réglettes portant à leur arête (22) supérieure des colliers (19,20,24,25) qui sont, de manière continue, de plus en plus torsadés vers leur extrémité, caractérisé en ce que la torsion croît plus que proportionnellement en fonction de la distance à la réglette.

2. Assemblage combustible selon la revendication 1, caractérisé en ce que les arêtes supérieures des réglettes se transforment doucement en les colliers torsadés.

3. Assemblage combustible selon la revendication 1 ou 2, caractérisé en ce que les colliers se rétrécissent de manière continue jusqu'à une torsion de 45° par rapport aux réglettes.

4. Assemblage combustible selon l'une des revendications 1 à 3, caractérisé en ce que les colliers comportent des parties de collier torsadées à 90° par rapport à la réglette, qui se transforment en réglettes transversales (25,26) , qui relient les extrémités des colliers de réglettes voisines.

5. Assemblage combustible selon la revendication 4, caractérisé en ce que les parties de collier comportent des parties de réglette issues des réglettes voisines et les réglettes transversales sont formées par soudure (38,39) des parties de réglette.

6. Assemblage combustible selon l'une des revendications 1 à 5, caractérisé en ce qu'une partie d'une réglette s'étendant entre deux crayons (1,3) combustibles porte deux saillies issues de la réglette, sur lesquelles l'un des deux crayons combustibles s'appuie, ainsi qu'un ressort (14) sur lequel l'autre crayon combustible s'appuie.

7. Assemblage combustible selon l'une des revendications 1 à 6, caractérisé en ce que les crayons combustibles sont disposés en mailles carrées d'une grille fictive, les colliers sont aux points d'intersection de la grille et en ce que les colliers de deux points d'intersection voisins qui portent un collier sont torsadés de manière symétrique comme dans un miroir l'un par rapport à l'autre. (flèches 32, 34).

8. Assemblage combustible selon l'une des revendications 1 à 7, caractérisé en ce qu'il est prévu des colliers torsadés symétriquement comme dans un miroir l'un par rapport à l'autre dans deux canaux d'écoulement voisins, qui sont chacun délimités par plusieurs crayons combustibles.
